# EUROPÄISCHE PATENTSCHRIFT

(11) **EP 0 752 526 B1**
(45) Veröffentlichungstag und Bekanntmachung des Hinweises auf die Patenterteilung: **05.11.1997**
(21) Anmeldenummer: 96110208.4
(22) Anmeldetag: 25.06.1996
(51) Int. Cl.: F02F 7/00, F16B 39/00

(54) **Brennkraftmaschine mit einer in einem Zylinderblock über Lagerdeckel fixierten Kurbelwelle**
Internal combustion engine with the crankshaft fitted in the cylinderblock over bearing caps
Moteur à combustion interne avec une vilebrequin fixée avec des chapeaux des paliers

(30) Priorität: 01.07.1995 DE 19524070
(43) Veröffentlichungstag der Anmeldung: 08.01.1997
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Meurer, Josef, 53844 Troisdorf (DE); Weber, Gottfried, 50672 Koeln (DE); Lenerz, Edmund, Prverel, Essex CM3 2NT (GB); Abts, Manfred, 51519 Odenthal (DE); Metz, Hans-Walter, 50259 Pulheim (DE)
(74) Vertreter: Messulam, Alec Moses

(56) Entgegenhaltungen:
- DE-A- 3 302 432
- DE-A- 3 322 861
- DE-C- 4 334 444
- FR-A- 2 135 632

## Beschreibung

Die Erfindung bezieht sich auf eine Brennkraftmaschine mit einer in einem Zylinderblock über Lagerdeckel fixierten Kurbelwelle, der im Oberbegriff des Patentanspruches 1 erläuterten Art.

Aus der DE-PS 43 34 444 ist eine Brennkraftmaschine mit einer in einem Zylinderblock über Lagerdeckel fixierten Kurbelwelle bekannt, an der unten am Zylinderblock an dessen Rändern und an den Lagerdeckeln ein Versteifungsbauteil angeordnet ist, wobei an den Schraubenbolzen der Lagerdeckel für die Kurbelwelle zylindrische Ansätze vorgesehen sind, über die mittels einer Distanzhülse eine zusätzliche Verschraubung für die inneren Verbindungsstellen des Versteifungsbauteiles ermöglicht wird.

Bei dieser bekannten Brennkraftmaschine sind hierbei verschiedene Ausführungsformen der Befestigung an den inneren Verbindungsstellen des Versteifungsbauteiles aufgezeigt, die jedoch durch eine Vielzahl von Bauteilen verhältnismäßig aufwendig sind.

Die Aufgabe der Erfindung ist es, eine Brennkraftmaschine mit einer in einem Zylinderblock über Lagerdeckel fixierten Kurbelwelle und einem unten am Zylinderblock an den Rändern und an den Lagerdeckeln verbundenen Versteifungsbauteil mit inneren Verbindungsstellen über zylindrische Ansätze an den Schraubenbolzen der Lagerdeckel für die Kurbelwelle derart zu verbessern, daß diese inneren Verbindungsstellen sämtliche auftretenden axialen und radialen Toleranzen einwandfrei ausgleichen und eine sichere, Schwingungen unterdrückende Verbindung zwischen den Schrauben der Lagerdeckel und dem Versteifungsbauteil herstellen.

Gemäß der Erfindung wird diese Aufgabe gelöst, indem bei einer Brennkraftmaschine mit einer in einem Zylinderblock über Lagerdeckel fixierten Kurbelwelle, der im Oberbegriff des Patentanspruches erläuterten Art, die im Kennzeichenteil des Patentanspruches aufgezeigten Merkmale angewendet werden.

Dadurch, daß der an den Schraubenbolzen ausgebildete zylindrische Ansatz von einer durch eingegossenes, aushärtendes Material gebildeten Distanzhülse umfaßt wird, deren Außenumfang sich über eine Kunststoffhülse einerseits an einem Ansatz des Schraubenbolzens und andererseits in einer Durchgangsöffnung des Versteifungsbauteiles abstützt, wird eine bei der Motorenmontage äußerst einfach herzustellende und sämtliche Axial- und Radialtoleranzen ausgleichende Befestigung des Versteifungsbauteiles am Zylinderblock und an den Schrauben der Lagerdeckel bereitgestellt.

In den weiteren Ansprüchen sind zweckmäßige Einzelheiten näher erläutert.

Die Erfindung wird anhand des in der Zeichnung gezeigten Ausführungsbeispieles näher erläutert. Es zeigt:
- Fig. 1: einen vertikalen Teilschnitt durch eine erfindungsgemäße Befestigungsanordnung;
- Fig. 2: eine Unteransicht der Kunststoffhülse in Fig. 1 und
- Fig. 3: einen vertikalen Teilschnitt durch eine Befestigungsanordnung, wie sie z.Z. angewendet wird.

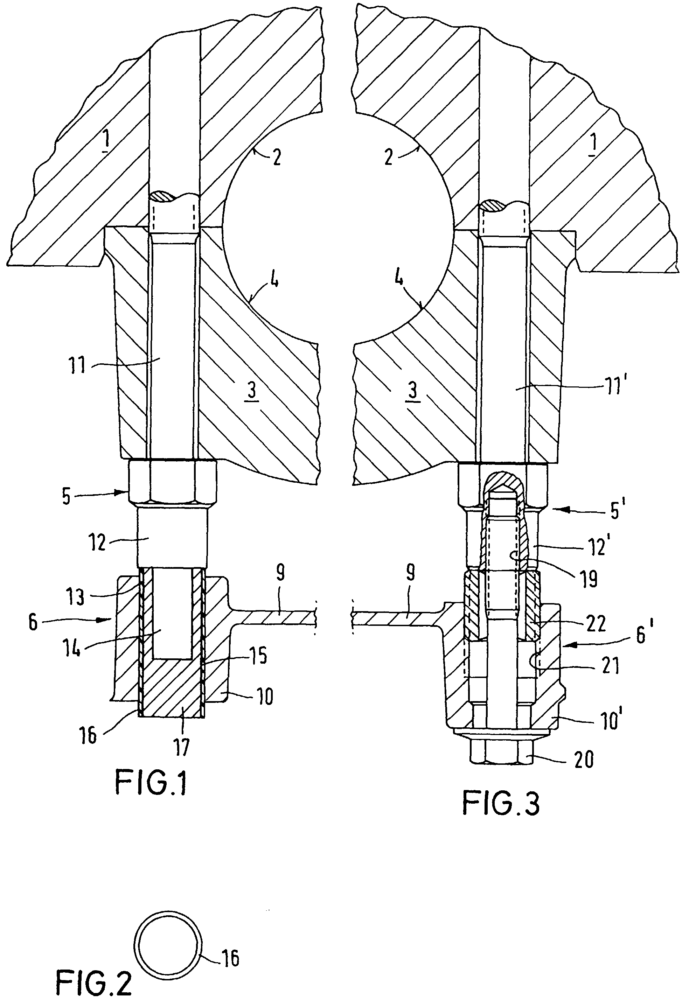

In Fig. 1 ist ein Teilbereich eines Zylinderblockes 1 einer Brennkraftmaschine angedeutet und bildet im Bereich eines sogenannten Lagerstuhles den unteren Teil 2 einer Lagerbohrung für die Kurbelwelle (nicht gezeigt). Ein Lagerdeckel 3 bildet den oberen Teil 4 einer Lagerbohrung für die Kurbelwelle und ist mit dem Zylinderblock 1 über zumindest zwei Schraubenbolzen 5 verbunden. Ein Versteifungsbauteil 6 für den Zylinderblock 1 ist mit dessen seitlichen Rändern (nicht gezeigt) über eine Vielzahl von Verschraubungen unter Zwischenschaltung einer üblichen Dichtung oder eines Dichtmittels verbunden.

Um die Versteifungswirkung dieses Versteifungsbauteiles 6 zu erhöhen, wird angestrebt, daß der großflächige Bodenbereich 9 des Verstärkungsbauteiles über zusätzliche Verbindungsstellen 10 am Zylinderblock 1 abgestützt wird.

Gemäß der Erfindung werden diese zusätzlichen Verbindungsstellen 10 unmittelbar über und in Verbindung mit den Schraubenbolzen 5 der Lagerdeckel 3 für die Kurbelwelle vorgesehen.

Die zur Befestigung der Lagerdeckel 3 vorgesehenen Schraubenbolzen 5 sind hierbei mit einem Schaftteil 11, einem Kopfteil 12 und einem sich an einem Absatz 13 anschließenden zylindrischen Ansatz 14 versehen. Die am Verstärkungsbauteil 6 vorgesehenen zusätzlichen Verbindungsstellen 10, die als büchsenartige Verdickungen im Versteifungsbauteil ausgebildet sind, weisen eine zylindrische Durchgangsbohrung 15 auf.

In die zylindrische Durchgangsbohrung 15 in den zusätzlichen Verbindungsstellen 10 wird eine Kunststoffhülse 16 so weit axial eingepreßt, bis sie abdichtend gegen den Absatz 13 am Kopfteil 12 des Schraubenbolzens 5 anliegt.

Wenn bei der Motorenmontage nach dem Aufsetzen des Versteifungsbauteiles 6 auf den Zylinderblock 1 dessen Randbereiche mit üblichen Schraubenbolzen befestigt sind, werden an sämtlichen inneren zusätzlichen Verbindungsstellen 10 die entsprechenden Kunststoffhülsen 16 axial eingesetzt und wird der sich zwischen dem zylindrischen Ansatz 14 an den Schraubenbolzen 5 und der Kunststoffhülse 16 ergebende Zwischenraum durch Eingießen eines aushärtenden Materials ausgefüllt. Hierdurch wird eine sämtliche axiale und radiale Toleranzen ausgleichende Verbindung zwischen den Schraubenbolzen 5 für die Lagerdeckel 3 und dem Verstärkungsbauteil 6 hergestellt, wodurch eine zusätzliche Abstützung des Kurbelwellenbereiches gegenüber transversale Schwingungen erreicht wird.

Als eingießbares, aushärtendes Material kann ein Kunststoffmaterial verwendet werden, durch entsprechende Versuche hat sich jedoch ein metallisches Material in Form einer Legierung aus Zink, Zinn und Wismut als besonders vorteilhaft herausgestellt, das bei einem niedrigen Schmelzpunkt von ca. 199° C die erwünschte Eigenschaft aufweist, daß es sich beim Erkalten etwas ausdehnt und dementsprechend die Verbindung in erwünschter Weise spielfrei gestaltet.

Die auf diese Weise hergestellte Verbindung der inneren Verbindungsstellen zu den Schraubenbolzen der Kurbelwellenlagerung muß jedoch im Falle einer Reparatur der Brennkraftmaschine wieder mit vertretbarem Aufwand lösbar sein und dies wird durch die Anordnung der Kunststoffhülse 16 sichergestellt, da diese sich beim Abziehen des Versteifungsbauteiles 6 von der Durchgangsbohrung 15 an den Verbindungsstellen 10 löst. Selbstverständlich kann die erwünschte Abziehkraft durch geeignete Wahl des Materials der Kunststoffhülse 16 und ggf. durch entsprechende Ausbildung der miteinander zusammenwirkenden Oberflächen entsprechend ausgelegt werden. So ist die Ausbildung einer bestimmten Oberflächenrauhigkeit der Durchgangsbohrung 15 gezielt herstellbar und ggf. kann eine Beschichtung der Oberfläche der Durchgangsbohrung 15 mit einem Trennmittel zweckmäßig sein.

Der Vollständigkeit halber ist in Fig. 3 noch eine herkömmliche Befestigungsanordnung gezeigt, wie sie z.Z. an Motoren verwendet wird.

Bei dieser bekannten Befestigung wird zum Befestigen eines Lagerdeckels 3 ein Schraubenbolzen 5' verwendet, der wieder einen Schaftteil 11' und einen Kopfteil 12' aufweist. Im Kopfteil 12' ist ein Innengewinde 19 ausgebildet, das mit einer Befestigungsschraube 20 zusammenwirkt.

In der Durchgangsbohrung 15' in den zusätzlichen Verbindungsstellen 10' wird in diesem Fall ein Innengewinde 21 eingearbeitet, das mit einer Gewindehülse 22 zusammenwirkt, die so eingestellt wird, daß die axiale Toleranz zwischen dem Versteifungsbauteil 6 und dem Kopfteil 12' des Schraubenbolzens 5' ausgeglichen wird. Erst danach wird durch Einsetzen der Befestigungsschraube 20 das Versteifungsbauteil 6 an den Schraubenbolzen 5' verspannt.

## Patentansprüche

1. Brennkraftmaschine mit einer in einem Zylinderblock (1) über Lagerdeckel (3) fixierten Kurbelwelle und einem unten am Zylinderblock (1) an dessen Rändern und an den Lagerdeckeln (3) verbundenen Versteifungsbauteil (6), wobei innere Verbindungsstellen (10) über an den Schraubenbolzen (5) der Lagerdeckel (3) ausgebildete zylindrische Ansätze (14) mit diesen verbunden sind,
**dadurch gekennzeichnet**, daß
- das in die Durchgangsbohrung (15) der inneren Verbindungsstellen (10) des Versteifungsbauteiles (6) eine Kunststoffhülse (16) eingepreßt ist, die sich axial an einem Ansatz (13) am Kopfteil (12) des Schraubenbolzens (5) abstützt und in die ein gießbares, aushärtendes Material (17) den zylindrischen Ansatz (14) umfassend eingegossen wird.

2. Brennkraftmaschine nach Anspruch 1,
**dadurch gekennzeichnet**, daß
- das in die Kunststoffhülse (16) eingegossene Material (17) ein aushärtendes Kunststoffmaterial ist.

3. Brennkraftmaschine nach Anspruch 1,
**dadurch gekennzeichnet**, daß
- das in die Kunststoffhülse (16) eingegossene Material (17) eine metallische Legierung, vorzugsweise eine Legierung aus Zink, Zinn und Wismut mit einem niedrigen Schmelzpunkt von 199° C ist, das sich beim Erkalten ausdehnt.

4. Brennkraftmaschine nach einem der Ansprüche 1 bis 3,
**dadurch gekennzeichnet**, daß
- die ein für Reparaturzwecke erforderliches Demontieren des Versteifungsbauteiles (6) ermöglichende Kunststoffhülse (16) durch eine entsprechende Bearbeitung der Innenbohrung (15) an den Verbindungsstellen (10) im Hinblick auf die Oberflächenrauhigkeit ausgelegt wird.

5. Brennkraftmaschine nach einem der Ansprüche 1 bis 4,
**dadurch gekennzeichnet**, daß
- die Kunststoffhülse (16) vor ihrem Einpressen in die Innenbohrung (15) der Verbindungsstellen (10) mit einem die Reibung verringernden Beschichtungsmaterial, wie z.B. einem Teflonspray, versehen wird.

## Claims

1. Internal combustion engine having a crankshaft fixed in an engine block (1) by means of bearing caps (3) and a stiffening member (6) connected at the bottom of the engine block (1) at its edges and at the bearing caps (3), inner connecting points (10) above cylindrical extensions (14) formed on the screw bolts (5) of the bearing caps (3) being connected to said extensions,
characterised in that
- the through bore (15) of the inner connection points (10) of the stiffening member (6) has a plastics material sleeve (16) pressed into it, said sleeve being supported axially on an extension (13) on the head part (12) of the screw bolt (5) and having a castable, hardenable material (17) cast into it to surround the cylindrical extension (14).

2. Internal combustion engine according to claim 1,
characterised in that
- the material (17) cast into the plastics material sleeve (16) is a curable plastics material.

3. Internal combustion engine according to claim 1,
characterised in that
- the material (17) cast into the plastics material sleeve (16) is a metallic alloy, preferably an alloy of zinc, tin and bismuth having a melting point of 199°C, which expands on cooling.

4. Internal combustion engine according to any of claims 1 to 3,
characterised in that
- the plastics material sleeve (16) is designed with respect to its surface roughness to make disassembly of the stiffening member (6) possible when necessary for the purpose of repair, through a corresponding machining of the internal bore (15) at the connection points (10).

5. Internal combustion engine according to one of claims 1 to 4,
characterised in that
- the plastics material sleeve (16) is provided with a friction-reducing coating material such as a Teflon spray before it is pressed into the internal bore (15) of the connection points (10).

## Revendications

1. Moteur à combustion interne avec un vilebrequin fixé dans un bloc-cylindres (1) par des chapeaux de paliers (3) et avec une pièce de renforcement (6) assemblée sur le dessous aux bords du bloc-cylindres (1) et aux chapeaux de paliers (3), des points d'assemblage intérieurs (10) étant assemblés aux boulons (5) des chapeaux de paliers (3) par l'intermédiaire d'épaulements cylindriques (14) configurés sur ces boulons,
**caractérisé** en ce qu'un manchon en matière plastique (16) est inséré dans le perçage traversant (15) des points d'assemblage intérieurs (10) de la pièce de renforcement (6), manchon qui s'appuie axialement contre un gradin (13) sur la partie de tête (12) du boulon (5) et dans lequel est coulé un matériau durcissant (17) qui entoure l'épaulement cylindrique (14).

2. Moteur à combustion interne selon la revendication 1, **caractérisé** en ce que le matériau (17) coulé dans le manchon en matière plastique (16) est un matériau plastique durcissant.

3. Moteur à combustion interne selon la revendication 1, **caractérisé** en ce que le matériau (17) coulé dans le manchon en matière plastique (16) est un alliage métallique, de préférence un alliage de zinc, d'étain et de bismuth avec un bas point de fusion de 199° C, qui se dilate lors du refroidissement.

4. Moteur à combustion interne selon l'une des revendications 1 à 3, **caractérisé** en ce que le manchon en matière plastique (16), qui permet un démontage de la pièce de renforcement (6) nécessaire à des fins de réparation, est adapté en termes de rugosité de surface par un usinage correspondant du perçage intérieur (15) aux points d'assemblage (10).

5. Moteur à combustion interne selon l'une des revendications 1 à 4, **caractérisé** en ce que le manchon en matière plastique (16) est pourvu, avant de l'emmancher dans le perçage intérieur (15) des points d'assemblage (10), d'un matériau de revêtement réduisant le frottement, tel qu'une pulvérisation de Téflon par exemple.
